## Europäisches Patentamt
## European Patent Office
## Office européen des brevets

(19)

(11) Veröffentlichungsnummer: **0 084 130**
**B1**

(12) # EUROPÄISCHE PATENTSCHRIFT

(45) Veröffentlichungstag der Patentschrift:
**27.11.85**

(51) Int. Cl.⁴: **C 01 B 3/00**, F 25 D 3/10,
F 25 J 1/00

(21) Anmeldenummer: **82111682.9**

(22) Anmeldetag: **16.12.82**

(54) **Verfahren zum Beladen eines Hydridspeichers mit Wasserstoff.**

(30) Priorität: **22.12.81 DE 3150887**

(43) Veröffentlichungstag der Anmeldung:
**27.07.83 Patentblatt 83/30**

(45) Bekanntmachung des Hinweises auf die Patenterteilung:
**27.11.85 Patentblatt 85/48**

(84) Benannte Vertragsstaaten:
**BE DE FR GB NL**

(56) Entgegenhaltungen:
**EP - A - 0 009 646**
**EP - A - 0 033 386**
**DE - A - 2 554 906**
**INTERNATIONAL JOURNAL OF HYDROGEN ENERGY,**
**Band 5, Nr 5, 1980, Norwich C. CARPETIS et al. "A study**
**on hydrogen storage byuse of cryoadsorbents", Seite n**
**539-554**
**BERICHTE TECHNIK UND WISSENSCHAFT, Nr 44, 1978**
**G. VERANNEMAN "Industrielle Anwendungen von**
**flüssigem Stickstoff", Seiten 3-14**

(73) Patentinhaber: **Linde Aktiengesellschaft,**
**Abraham-Lincoln-Strasse 21, D-6200 Wiesbaden (DE)**

(72) Erfinder: **Kahl, Helmut, Dipl.-Ing., Hirschbergstrasse 3,**
**D-8029 Sauerlach (DE)**

(74) Vertreter: **Schaefer, Gerhard, Dr., Linde**
**Aktiengesellschaft Zentrale Patentabteilung,**
**D-8023 Höllriegelskreuth (DE)**

## Beschreibung

Die Erfindung betrifft ein Verfahren zum Beladen eines Hydridspeichers mit Wasserstoff, wobei das den Wasserstoff aufnehmende Hydridmaterial während der Beladung gekühlt wird.

Wasserstoff ist als Energieträger in den letzten Jahren weltweit in den Mittelpunkt des Interesses gerückt. Zur Speicherung von Wasserstoff ist dessen reversible Anlagerung an hydridbildende Materialien, insbesondere an Metalle und Metallegierungen bekannt. Der physikalische Ablauf der Hydrierung eines hydridbildenden Materials kann in folgende Schritte unterteilt werden: Adsorption des Wasserstoffmoleküls an der Materialoberfläche, Dissoziation des Wasserstoffmoleküls in Wasserstoffatome, Diffusion der Wasserstoffatome in das Material und Ausbildung der Hydridphase. Derartige Hydride können wieder in Wasserstoff und Material zerfallen. Ob die Zerfallsreaktion oder die Hydridbildungsreaktion abläuft, hängt bei einer gegebenen Temperatur nur vom Druck des Wasserstoffs ab. Bei der Bildung von Hydriden wird im allgemeinen Bindungswärme frei. Während des Beladevorgangs muss daher Wärme abgeführt werden. Um diese Bildungswärme abzuleiten, ist es bekannt, das Hydridmaterial während der Beladung mit Wasserstoff z.B. mittels Kühlwasser zu kühlen. Dabei verläuft die Beladekurve, d.h. der Füllgrad eines Hydridspeichers als Funktion der Zeit, zwar zunächst sehr steil, nähert sich dann aber asymptotisch dem maximalen Füllgrand. Ein Beladevorgang dauert daher relativ lang. Diese Eigenschaft ist aber von grossem Nachteil, wenn ein Hydridspeicher beispielsweise als mobiler Wasserstoffspeicher betrieben und daher an der Füllstelle möglichst rasch beladen werden soll.

Durch EP-A1 Nr. 9646 ist es bekannt, das Hydridmaterial eines Hydridspeichers zu kühlen, wenn bei Absorption grosser Wasserstoffmengen im Metallgitter Absorptionswärme frei wird. Als Kühlmittel wird bevorzugt Wasser verwendet.

Durch EP-A1 Nr. 33386 ist ein Verfahren zum Transport und zur Speicherung permanenter Gase bekannt. Dabei wird das Gas auf eine Temperatur oberhalb des Siedepunktes abgekühlt. Die Abkühlung kann mittels flüssigem Stickstoff erfolgen. Das abgekühlte Gas wird dann in isolierte Behälter gefüllt.

Der Erfindung liegt die Aufgabe zugrunde, ein Verfahren der eingangs geschilderten Art anzugeben, das einen schnellen Beladevorgang ermöglicht.

Diese Aufgabe wird erfindungsgemäss dadurch gelöst, dass das Hydridmaterial vor und/oder während der Beladung durch ein tiefkaltes Fluid, z.B. ein tiefkaltes, verflüssigtes Gas wie verflüssigter Stickstoff oder eine gekühlte Sole, gekühlt wird.

Erfindungsgemäss wird das Hydridmaterial bereits vor, spätestens jedoch während der Beladung des Speichers mit Wasserstoff intensiv durch ein tiefkaltes Fluid gekühlt. Im Unterschied zu herkömmlichen Verfahren wird nicht nur die Bildungswärme abgeleitet, sondern auch die Temperatur des Hydridmaterials erheblich gesenkt. Hierbei kann das tiefkalte Fluid beispielsweise über die Wärmetauscher in einem Hydridspeicher in indirekten Wärmetausch mit dem Hydridmaterial gebracht werden.

Es ist festgestellt worden, dass der Füllvorgang durch diese Massnahmen erheblich beschleunigt werden und ein höherer maximaler Füllungsgrad erzielt werden kann. Das erfindungsgemässe Verfahren ermöglicht somit auch eine erheblich bessere Ausnutzung von Füllstandskapazitäten.

Daher eignet sich das erfindungsgemässe Verfahren besonders für das Beladen eines Hydridspeichers, der als mobiler Wasserstoffspeicher eingesetzt wird. Wenn beispielsweise Wasserstoff an der Erzeugungsstelle in Hydridspeicher gefüllt wird, welche anschliessend zum Verbraucher an einen anderen Ort gebracht werden, dann können durch ein schnelleres Beladen der Speicher Engpässe an der Wasserstoff-Tankstelle vermieden werden. Das Obengesagte ist jedoch auch für das Füllen stationärer Speicher interessant.

Verlaufen die Bildung und Zersetzung eines Hydrids ausreichend schnell, können diese als Pumpen oder Kompressoren ohne bewegliche Teile verwendet werden. Die zur Verdichtung erforderliche Kraft entsteht hierbei indem man durch Heizen und Kühlen ein Hydrid abwechselnd zersetzt und sich neu bilden lässt und auf diese Weise periodische Druckschwankungen erzeugt. Da das erfindungsgemässe Verfahren den Beladevorgang erheblich verkürzt, ist die Kühlung eines als Wasserstoffkompressor arbeitenden Hydridspeichers mit einem tiefkalten Fluid während dessen Beladung besonders zweckmässig.

Wird in einem Diagramm der Wasserstoffdruck auf der Ordinate und die aufgenommene Menge Wasserstoff auf der Abszisse aufgetragen, so können in dieses Diagramm Isothermen eingezeichnet werden, die einen Beladevorgang (Entladevorgang) bei konstanter Temperatur repräsentieren. Diese Isothermen weisen bei einem bestimmten Druck einen horizontalen Verlauf («Plateau») auf. Liegen nun die zu verschiedenen Beladetemperaturen (Isothermen) gehörenden Plateaus weit auseinander, lässt sich durch die erfindungsgemässe Intensivkühlung Wasserstoff-Kompressionsenergie sparen, da bei sehr niedrigem Druck hydriert werden kann.

In einer vorteilhaften Ausgestaltung des Erfindungsgedankens wird das Hydridmaterial nur während der letzten Phase des Beladungsvorganges durch das tiefkalte Fluid gekühlt. Diese Variante erweist sich wegen des sparsamen Verbrauchs an tiefkaltem Fluid als besonders wirtschaftlich. Die erfindungsgemässe Intensivkühlung kann z.B. einsetzen, wenn sich der Füllgrad nur noch langsam dem maximalen Füllgrad nähert (asymptotischer Teil der Beladekurve).

In einer anderen Ausgestaltung des Erfindungsgedankens werden vorteilhafterweise eine tiefgekühlte Sole oder ein tiefsiedendes, verflüssigtes Gas — insbesondere verflüssigter Stickstoff — als tiefkaltes Fluid verwendet.

In einem Ausführungsbeispiel wurde bei der Beladung eines aus einer Titan-Eisen-Legierung bestehenden Speichermaterials eine besonders effektive Füllung erzielt, wenn ein auf ca. 193 K gekühltes Fluid verwendet wurde.

**Patentansprüche**

1. Verfahren zum Beladen eines Hydridspeichers mit Wasserstoff, wobei das den Wasserstoff aufnehmende Hydridmaterial während der Beladung gekühlt wird, dadurch gekennzeichnet, dass das Hydridmaterial vor und/oder während der Beladung durch ein tiefkaltes Fluid, z.B. ein tiefkaltes, verflüssigtes Gas wie verflüssigter Stickstoff oder eine gekühlte Sole, gekühlt wird.

2. Verfahren nach Anspruch 1, dadurch gekennzeichnet, dass das Hydridmaterial nur während der letzten Phase des Beladungsvorganges, in der sich der Füllgrad des Hydridspeichers nur noch langsam dem maximalen Füllgrad nähert, durch das tiefkalte Fluid gekühlt wird.

**Claims**

1. A process for charging a hydride store with hydrogen, in which the hydride material which absorbs the hydrogen is cooled during charging, characterized in that prior to and/or during the charging, the hydride material is cooled by a low-temperature fluid, e.g. a low-temperature liquefied gas, such as liquefied nitrogen, or a cooled brine.

2. A process as claimed in Claim 1, characterized in that the hydride material is only cooled by the low-temperature fluid during the last phase of the charging operation in which the degree of filling of the hydride store only slowly approaches the maximum degree of filling.

**Revendications**

1. Procédé pour la charge en hydrogène d'un réservoir à hydrure, la matière hydrurée recevant l'hydrogène étant refroidie pendant la charge, caractérisé en ce que la matière hydrurée est refroidie avant et/ou pendant la charge au moyen d'un fluide sous-refroidi, par exemple un gaz liquéfié sous-refroidi comme le nitrogène liquide ou une saumure refroidie.

2. Procédé selon la revendication 1, caractérisé en ce que la matière hydrurée est refroidie par le fluide sous-refroidi uniquement pendant la dernière phase du processus de charge au cours de laquelle le taux de remplissage du réservoir à hydrure se rapproche encore mais lentement du taux de remplissage maximal.